# EUROPEAN PATENT SPECIFICATION

(11) **EP 2 100 516 B1**
(45) Date of publication and mention of the grant of the patent: **22.02.2012**
(21) Application number: 08102151.1
(22) Date of filing: 29.02.2008
(51) Int. Cl.: A23L 1/31, A23L 1/00, A23L 1/325, A23P 1/08, A23L 1/182

(54) **Process for industrially producing food substrates coated with grains and food substrates coated with partially re-hydrated grains**
Verfahren zur industriellen Herstellung von Nahrungssubstraten, die mit Körnern beschichtet sind, und Nahrungssubstraten, die mit teilweise rehydrierten Körnern beschichtet sind
Processus pour la production industrielle de substrats alimentaires revêtus de grains et substrats alimentaires revêtus de grains partiellement réhydratés

(43) Date of publication of application: 16.09.2009
(73) Proprietor: Nestec S.A., 1800 Vevey (CH)
(72) Inventor: VILLOT, Dominique, 76370 DERCHIGNY GRAINCOURT (FR); NICOLAS, Harold, 76540 Ypreville Biville (FR)

(56) References cited:
- BE-A- 531 728
- JP-A- 2002 000 196
- US-A- 4 741 933
- ANONYMOUS: "Exclusive Miyamato Sushi Recipes- California Roll Recipe"[Online] 3 August 2007 (2007-08-03), pages 1-2, XP002486765 Retrieved from the Internet: URL:http://www.sushilinks.com/sushi-recipe s/california-roll.html> [retrieved on 2008-07-03]

## Description

The present invention relates to a new process for producing food substrates coated or fully covered with cooked grains using conventional industrial coating lines.

Food substrates coated with cooked rice grains are becoming more and more familiar in food consumption. In these products, pieces of meat, fish, seafood or vegetables are at least partially coated with rice grains, said rice grains being unbroken and cooked, that is to say hydrated and soft, and the starch being gelatinized. Some of the most famous type for such products are sushis called Uramaki or California rolls where ingredients like vegetables and fish pieces are rolled in a coating of cooked unbroken rice grains. These types of products are either hand-made, produced by stuffing technologies, or produced batch wise because conventional industrial coating lines cannot handle wet particulates such as cooked rice grains. Such conventional industrial coating lines usually consist in an endless conveyor belt supporting the food substrates to be coated and in hoppers disposed above the conveyance path for throwing the coating components (predust, batter, particulates) and covering the food substrates passing along the conveyance path. As cooked rice grains are soft and sticky, they would immediately stick to the inside parts of the hopper and to the surface of the conveyor belt which would lead rapidly to the jamming of the machine.

It was discovered that a conventional industrial coating line can be used for producing food substrates coated or fully covered with cooked grains enabling high cadence and cost effective production.

The invention relates to a process for producing food substrates coated by cooked grains on conventional industrial coating lines where :
- food substrates are covered with a batter,
- battered food substrates are coated by dehydrated grains, said grains being selected in the group of precooked grains,
- coated food substrates are treated by a wet heat treatment in order to at least solidify the batter.

According to the present invention, the food substrates can be of any nature. They can be selected from fish, meat, poultry, seafood, vegetables, fruits, cheese either as a whole or part of them, and mixtures thereof. Whole food pieces can be fish filet or portions from block of fish filets, meat cuts, vegetable and fruits. Whole food pieces can also be formed in pieces like nuggets based on fish, meat, seafood, vegetable, fruit, cheese and mixtures thereof.

In the two first steps of the process of the present invention, the food substrates are treated according to conventional industrial coating processes except as for the nature of the materials used to coat the food substrates.

The first step consists in covering the food substrates with a liquid batter so that the substrates are at least partially coated with this liquid. This liquid can be any liquid batter well known by the practitioners for coating food substrates. It is usually composed of one or more flours combined with liquids like water or milk. Other batter ingredients can be selected between : flavors, salt, starch, hydrocolloids, proteins, flavours, colorants and mixtures thereof.

Optionally, the food substrates can be predusted before being battered. This optional predusting step consists in predusting the food substrates with a powder mix so that the substrates are coated with this powder before the first batter application step. This powder can be any dusting powder well known by the practitioners for the general process of coating food substrates such as flour, starch, salt and mixture thereof.

The second step consists in coating the battered food substrates with dehydrated precooked grains. The grains used in the present invention can be any cereal or legume grains like barley, oats, dhal, jasmine rice, white rice, brown rice, red rice, black rice, wheat, split mungbean, green or red beans and mixtures thereof. The grains can also be "whole grains", ie, undehulled or partially dehulled to maintain the known nutritional benefits of the seed coats (e.g., fibers,...). Preferably the grains are unbroken with the aim of producing intact cooked grains at the end of the coating and cooking process. The preferred grains are white rice grains. According to the present invention, the dehydrated precooked grains used in this process are selected in the group of instant re-hydration grains. Instant re-hydration grains mean any grains that have been treated in order to be able to be re-hydrated instantly with hot water or to be quickly cooked (within a time of around 5 min) ; these grains are also known as quick re-hydration grains. As for rice, such grains are also known under the terms of instant rice, precooked rice or quick-cooking rice. The treatments for producing such rice grains for instant re-hydration are well known : they usually consist in cooking the rice grains in water and/or steam until the starch gelatinizes and then in dehydrating them in such a manner as to create or retain an open porous structure. Such a treatment is described for example in WO 00/44243 to which the present invention is not limited. According to the present invention, the grains for instant re-hydration are applied in their dehydrated state on the food substrates. The instant re-hydration grains can be mixed with other dry particulates or powders by example freeze-dried vegetable, seasonings and spices to produce colour, taste and texture. The instant re-hydration grains generally present a granulometry comprised between 0,20 and 4 mm, preferably between 0,5 and 1,5 mm, said granulometry corresponding to the main fraction of the grains obtained by dynamic sieving. The battered food substrates are coated by dehydrated grains with an industrial breader. A conventional breader generally consists in an endless conveyor belt supporting the battered food substrates to be coated. A hopper is disposed above the food substrates conveyance path in which the instant re-hydration grains are provided to generate a falling curtain of grains. The coating can cover all the surface of the food substrate or at least a part.

In the third step the coated food substrates are treated by the wet heat treatment in order to at least solidify the batter. This wet heat treatment can be cooking in steam or in hot water, e.g. water bath or steam oven. During this wet heat treatment, the batter solidifies and the grains become adherent to each other and to the substrate. Usually a wet heat treatment of 10 to 30 seconds in boiling water is sufficient to set the batter. The process conditions of the heat treatment step, especially its time length and temperature, can be selected according to two preferred modes.

According to a first mode, the grain-coated food substrates are treated by the wet heat treatment in order to solidify the batter and totally re-hydrate the instant re-hydration grains. According to a preferred embodiment of this first mode, the food substrates are fully cooked too. When grains are instant re-hydration white rice, the total re-hydration of the rice grains is generally obtained when rice grains reach between 55 and 80 % of moisture, preferably between 60 and 70 % of moisture. This percentage depends on the desired final mouthfeel and texture sensation of the rice (more or less soft or firm) and also of the nature of the rice. The advantage of this first mode is that these grain-coated food substrates can be chilled, packaged and commercialised refrigerated to be eaten cold or rapidly reheated by standard kitchen equipment like microwave oven, steam cooker or oven. These coated substrates can also be frozen, and packaged for commercialization.

According to the second mode, the grain-coated food substrates are treated by a wet heat treatment in order to solidify the batter and to only partially re-hydrate the instant re-hydration grains. The choice of the degree of partial re-hydration usually depends on the final reheating mode of the coated food substrates before consumption. When grains are instant re-hydration white rice, the wet heat treatment can partially re-hydrate the rice grains so that they preferably comprise between 25 and 60 % of moisture. This second mode is particularly interesting because it can produce products in accordance with the wishes or requirements of the end-users ; if the grain-coated food substrates are to be reheated by steam or by hot water, this reheating completes the re-hydration of the instant re-hydration grains so that the final product to be served is totally re-hydrated. Depending on their available heating equipments or their special needs (deferred cooking for out of home catering for example), the level of re-hydration of the industrial process can then be adapted to accommodate their needs in a way to optimise cost and quality. This second mode is advantageous for products targeted at out-of-home commercial and social catering operations.

The present invention also concerns the use of precooked dehydrated grains to produce food substrates coated with fully re-hydrated cooked grains, particularly to industrially produce such products.

Lastly the present invention concerns food substrates coated with partially re-hydrated precooked dehydrated grains. The nature of the food substrates and the grains are identical as those identified above. These products are preferably produced according to the second mode of the process described above. Preferably such food substrates are coated with precooked grains that are precooked white rice grains with a moisture comprised between 25 and 60 %. According to a preferred mode, these food substrates are frozen or chilled.

### EXAMPLE

70 g of frozen white fish portions are produced by sawing a frozen fish block. Portions are shaped as rectangles with a thickness of about 15 mm. The fish portions are predusted with flour in a conventional flour applicator. A batter prepared in an entirely conventional manner by using 35 kg of batter powder and 65 kg of water is applied on the predusted fish portions in a conventional way. A crumb applicator is loaded with precooked dehydrated rice grains (produced according to the process defined in WO 00/44243) and the battered fish portions are then coated with the precooked rice grains in a conventional way with the crumb applicator.

The rice coated fish portions are then immersed during 30 seconds into a water bath presenting a temperature comprise between 95 and 100°C in order to solidify the batter and to partly cook the rice coated fish portions. At the end of the immersion, the rice grains comprise between 45 and 50 % of moisture and the grains are adherent to each other and to the fish portions. Then the rice coated portions are frozen to -25°C through a freezing tunnel in agreement with entirely conventional methods and apparatus. The frozen partly cooked rice coated portions are stored frozen until reheating and consumption.

For consumption, the frozen rice coated fish portions are reheated in a steam cooker during 7 minutes. After reheating, the products have the appearance of fish portions coated with cooked rice grains, where individual rice grains are apparent. From the organoleptic point of view, the product after reheating combines the attractive dual texture of the cooked fish inside with the soft cooked rice outside.

## Claims

1. Process for producing food substrates coated by cooked grains on conventional industrial coating lines where :
- food substrates are covered with a batter,
- battered food substrates are coated by dehydrated grains, said grains being selected in the group of precooked grains,
- coated food substrates are treated by a wet heat treatment in order to at least solidify the batter.

2. Process according to Claim 1 where food substrates are selected from fish, meat, poultry, seafood, vegetables, fruits, cheese, either as a whole or as part of them, and mixtures thereof.

3. Process according to Claim 1 or 2 where the food substrates are predusted before being battered.

4. Process according to any previous claims where the grains are selected from : barley, oats, dhal, jasmine rice, brown rice, red rice, black rice, wheat, split mungbean, green or red beans and mixtures thereof.

5. Process according to any previous claims where the pre-cooked grains are instant re-hydration grains.

6. Process according to any previous claims where the pre-cooked grains are instant re-hydration white rice grains.

7. Process according to any previous claims where the battered food substrates are coated by dehydrated grains with an industrial breader.

8. Process according to any previous claims where the grain-coated food substrates are treated by the wet heat treatment in order to solidify the batter and totally re-hydrate the grains.

9. Process according to claim 8 where the grains are instant re-hydration white rice grains and the rice grains are fully re-hydrated by the wet heat treatment until their moisture is comprised between 55 and 80 %.

10. Process according to one of the claims 1 to 7 where the coated food substrates are treated by the wet heat treatment in order to solidify the batter and to only partially re-hydrate the instant re-hydration grains.

11. Process according to claim 10 where the grains are instant re-hydration white rice grains and the rice grains are partially re-hydrated by the wet heat treatment until their moisture is comprised between 25 and 60 %.

12. Use of precooked dehydrated grains to produce food substrates coated with fully rehydrated cooked grains.

13. Use according to claim 12 to industrially produce food substrates coated with fully rehydrated cooked grains.

14. Food substrates prepared according to the process of any of claims 1 to 11 coated with partially re-hydrated precooked dehydrated grains.

15. Food substrates according to Claim 14 where precooked grains are precooked white rice grains with a moisture comprised between 25 and 60 %.

16. Food substrates according to Claim 14 or 15 where the food substrates are frozen or chilled.

## Patentansprüche

1. Verfahren zur Herstellung von mit gekochten Körnern beschichteten Nahrungssubstraten auf herkömmlichen industriellen Beschichtungsanlagen, bei dem:
- Nahrungssubstrate mit einem Teig bedeckt werden,
- mit Teig bedeckte Nahrungssubstrate mit dehydrierten Körnern beschichtet werden, wobei diese Körner aus der Gruppe der vorgekochten Körner ausgewählt sind,
- beschichtete Nahrungssubstrate durch eine feuchte Wärme-Behandlung behandelt werden, um zumindest den Teig zu verfestigen.

2. Verfahren nach Anspruch 1, wobei Nahrungssubstrate ausgewählt sind aus Fisch, Fleisch, Geflügel, Meeresfrüchten, Gemüse, Obst, Käse, entweder als Ganzes oder als Teil davon, und Mischungen davon.

3. Verfahren nach Anspruch 1 oder 2, wobei die Nahrungssubstrate vorbestäubt werden, bevor sie mit Teig bedeckt werden.

4. Verfahren nach einem vorhergehenden Ansprüche, wobei die Körner ausgewählt sind aus: Gerste, Hafer, Dhal, Jasminreis, braunem Reis, rotem Reis, schwarzem Reis, Weizen, Split-Mungobohne, grünen oder roten Bohnen und Mischungen davon.

5. Verfahren nach einem der vorhergehenden Ansprüche, wobei die vorgekochten Körner Instantrehydratisierungs-Körner sind.

6. Verfahren nach einem der vorhergehenden Ansprüche, wobei die vorgekochten Körner weiße Instantrehydratisierungs-Reiskörner sind.

7. Verfahren nach einem der vorhergehenden Ansprüche, wobei die mit Teig bedeckten Nahrungssubstrate durch eine industrielle Panierlinie mit dehydrierten Körnern beschichtet werden.

8. Verfahren nach einem der vorhergehenden Ansprüche, wobei die Korn-beschichteten Nahrungssubstrate mit der feuchte Hitze-Behandlung behandelt werden, um den Teig zu verfestigen und die Körner vollständig zu rehydratisieren.

9. Verfahren nach Anspruch 8, wobei die Körner weiße Instantrehydratisierungs-Reiskörner sind und die Reiskörner durch die feuchte Hitze-Behandlung vollständig rehydratisiert werden, bis ihr Feuchtegehalt zwischen 55 und 80% beträgt.

10. Verfahren nach einem der Ansprüche 1 bis 7, wobei die beschichteten Nahrungssubstrate mit der feuchte Hitze-Behandlung behandelt werden, um den Teig zu verfestigen und um die Instantrehydratisierungs-Körner nur teilweise zu rehydratisieren.

11. Verfahren nach Anspruch 10, wobei die Körner weiße Instantrehydratisierungs-Reiskörner sind und die Reiskörner durch die feuchte Hitze-Behandlung teilweise rehydratisiert werden, bis ihr Feuchtegehalt zwischen 25 und 60% beträgt.

12. Verwendung von vorgekochten dehydrierten Körnern, zur Herstellung von Nahrungssubstraten, die mit vollständig rehydratisierten gekochten Körnern beschichtet sind.

13. Verwendung nach Anspruch 12, zur industriellen Herstellung von Nahrungssubstraten, die mit vollständig rehydratisierten gekochten Körnern beschichtet sind.

14. Nach einem Verfahren nach einem der Ansprüche 1 bis 11 hergestellte Nahrungssubstrate, die mit teilweise rehydratisierten vorgekochten dehydratisierten Körnern beschichtet sind.

15. Nahrungssubstrate nach Anspruch 14, wobei vorgekochte Körner vorgekochte weiße Reiskörner mit einem Feuchtegehalt zwischen 25 und 60% sind.

16. Nahrungssubstrate nach Anspruch 14 oder 15, wobei die Nahrungssubstrate gefroren oder gekühlt sind.

## Revendications

1. Procédé pour la production de substrats alimentaires enrobés par des grains cuits dans une chaîne d'enrobage industrielle conventionnelle dans laquelle :
- des substrats alimentaires sont recouverts avec une pâte,
- des substrats alimentaires recouverts de pâte sont enrobés par des grains déshydratés, lesdits grains étant sélectionnés parmi le groupe des grains précuits,
- des substrats alimentaires enrobés sont traités par un traitement thermique humide de manière à au moins solidifier la pâte.

2. Procédé la revendication 1 dans lequel des substrats alimentaires sont sélectionnés à partir de poisson, viande, volaille, fruit de mer, légumes, fruits, fromage, soit entièrement soit comme une partie de ceux-ci, et mélanges de ceux-ci.

3. Procédé selon la revendication 1 ou 2 dans lequel les substrats alimentaires sont saupoudrés préalablement avant d'être recouverts de pâte.

4. Procédé selon l'une quelconque des revendications précédentes dans les grains sont sélectionnés à partir de : orge, avoine, dal, riz au jasmin, riz brun, riz rouge, riz noir, blé, haricot mungo cassé, haricot verts ou rouges et des mélanges de ceux-ci.

5. Procédé selon l'une quelconque des revendications précédentes dans lequel les grains pré-cuits sont des grains à réhydratation instantanés.

6. Procédé selon l'une quelconque des revendications précédentes dans lequel les grains pré-cuits sont des grains de riz blanc à réhydratation instantanée.

7. Procédé selon l'une quelconque des revendication précédentes dans lequel les substrats alimentaires recouverts de pâte sont enrobés par des grains déshydratés avec un appareil à paner industriel.

8. Procédé selon l'une quelconque des revendications précédentes dans lequel les substrats alimentaires enrobés de grains sont traités par le traitement thermique humide de manière à solidifier la pâte et à réhydrater totalement les grains.

9. Procédé selon la revendication 8 dans lequel les grains sont des grains de riz blanc à réhydratation instantanée et les grains de riz sont complètement réhydratés par le traitement thermique humide jusqu'à ce que leur humidité soit comprise entre 55 et 80 %.

10. Procédé selon l'une des revendications 1 à 7 dans lequel les substrats alimentaires enrobés sont traités par le traitement thermique humide de manière à solidifier la pâte et à réhydrater seulement partiellement les grains à réhydratation instantanés.

11. Procédé selon la revendication 10 dans lequel les grains sont des grains de riz blanc à réhydratation instantanée et les grains de riz sont partiellement réhydratés par le traitement thermique humide jusqu'à ce que leur humidité soit comprise entre 25 et 60 %.

12. Utilisation de grains déshydratés pré-cuits pour produire des substrats alimentaires enrobés avec des grains cuits réhydratés complètement.

13. Utilisation selon la revendication 12 pour produire de manière industrielle des substrats alimentaires enrobés avec des grains cuits réhydratés complètement.

14. Substrats alimentaires préparés selon le procédé de l'une quelconque des revendications 1 à 11 et enrobées avec des grains déshydratés pré-cuits et réhydratés partiellement.

15. Substrats alimentaires selon la revendication 14 dans lesquels des grains pré-cuits sont des grains de riz blanc pré-cuits ayant une humidité comprise entre 25 et 60 %.

16. Substrats alimentaires selon la revendication 14 ou 15, les substrats alimentaires étant congelés ou réfrigérées.
